(19) Europäisches Patentamt
European Patent Office
Office européen des brevets

(11) Numéro de publication: **0 309 338 B1**

(12) # FASCICULE DE BREVET EUROPEEN

(45) Date de publication de fascicule du brevet: **11.11.92**

(51) Int. Cl.$^5$: **C08G 73/10**

(21) Numéro de dépôt: **88402372.2**

(22) Date de dépôt: **20.09.88**

Le dossier contient des informations techniques présentées postérieurement au dépôt de la demande et ne figurant pas dans le présent fascicule.

(54) **Compositions de polyimides gravables en milieu basique.**

(30) Priorité: **25.09.87 FR 8713406**

(43) Date de publication de la demande:
**29.03.89 Bulletin 89/13**

(45) Mention de la délivrance du brevet:
**11.11.92 Bulletin 92/46**

(84) Etats contractants désignés:
**BE CH DE GB IT LI NL**

(56) Documents cités:
**EP-A- 0 077 718**
**US-A- 3 939 109**

(73) Titulaire: **CENTRE D'ETUDES DES MATERIAUX ORGANIOUES POUR TECHNOLOGIES AVANCEES**
**Autoroute Lyon-Vienne Echangeur de Solaize-Vernaison Solaize**
**F-69390 Vernaison(FR)**

(72) Inventeur: **Garapon, Jacques**
**64, rue des Aqueducs**
**F-69005 Lyon(FR)**
Inventeur: **Mileo, Jean-Claude**
**La Fontaine Amélie**
**F-38330 Saint Ismier(FR)**
Inventeur: **Mercier, Régis**
**34, rue du Commandant Charcot**
**F-69000 Lyon(FR)**
Inventeur: **Gaillard, Jean**
**18, rue Alfred Gueymard**
**F-38400 Saint Martin d'Heres(FR)**

(74) Mandataire: **Colas des Francs, Jean et al**
**Institut Français du Pétrole 4, Avenue de Bois Préau**
**F-92502 Rueil-Malmaison(FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet de nouvelles compositions de polyimides aromatiques cyclisés qui sont solubles dans de nombreux solvants organiques polaires. Elle concerne également l'utilisation de ces compositions de polyimides pour fabriquer des films ou des revêtements qui adhèrent fortement sur les surfaces minérales. L'invention a aussi pour objet l'obtention de films et de revêtements qui sont solubles à la température ambiante dans des solutions aqueuses basiques.

On sait que les polymères thermostables sont constitués de segments polymères rigides aromatiques carbocycliques et hétérocycliques. Ces segments présentent en effet deux avantages. Le premier est que leur température de fusion ou transition vitreuse très élevée assure le maintien des propriétés mécaniques lorsque les polymères sont portés à haute température. Le deuxième avantage est apporté par les fortes énergies de liaison qui existent dans les structures aromatiques carbocycliques et hétérocycliques. Ces fortes énergies de liaison assurent aux polymères une grande résistance aux réactions chimiques d'oxydation et de pyrolyse à haute température.

Ces considérations sont maintenant bien connues et ont fait l'objet de développements scientifiques par exemple dans des ouvrages tels que celui de P.E. Cassidy (Thermally Stable Polymers: Synthesis and Properties, Marcel Dekker Inc., New York, N.Y. 1980) ou de J.P. Critchley, G.J. Knight, W.W. Wright. (Heat Resistant Polymers: Technology Useful Materials, Plenum Press, New York, N.Y. 1983).

L'inconvénient de ces structures très rigides est que les interactions entre les chaînes macromoléculaires sont extrêmement fortes, avec pour conséquence une insolubilité presque totale de la plupart de ces polymères dans les solvants organiques. Pour les utilisations qui nécessitent l'emploi de polymères de haute masse moléculaire, il faut essayer de trouver des structures solubles intermédiaires, non cyclisées, qui constituent des précurseurs de la forme finale cyclique. L'exemple le plus connu est celui des polyimides aromatiques qui sont préparés par la réaction de condensation d'un dianhydride d'acide aromatique tétracarboxylique avec une diamine aromatique primaire. Lorsque cette réaction est effectuée à basse température dans un solvant aprotique polaire, il se forme un polyamide-acide qui reste en solution dans le solvant de synthèse du polymère. La solution de polyamide-acide est utilisable pour l'obtention de films ou de pellicules qui sont ensuite transformés en polyimides insolubles et infusibles par chauffage à haute température. L'inconvénient majeur de cette technologie est que les solutions de polyamide-acides sont très sensibles aux réactions d'hydrolyse et à la chaleur, d'où la nécessité de les conserver à très basse température, en atmosphère anhydre et de préférence à l'abri de la lumière. De plus, les solutions de polyamide-acides ne se prêtent pas à toutes les applications.

La préparation de polymères thermostables, et en particulier de polyimides, solubles à l'état cyclisé a fait l'objet d'un important effort de recherche. Cette augmentation de la solubilité des polymères thermostables dans les solvants organiques a été par exemple obtenue en utilisant des réactifs dérivés du benzhydrol, porteurs de groupements alcool secondaire qui confèrent à la chaîne macromoléculaire de fortes interactions avec les solvants organiques polaires tels que la N-méthylpyrrolidinone-2, les phénols, les éthers, etc. Des exemples de polymères de ce type sont donnés dans le brevet français 2 514 772. En utilisant en particulier la réaction de polycondensation des diesters de l'acide benzhydrol tétracarboxylique-3,3′,4,4′ avec les diamines aromatiques primaires, il est possible d'obtenir des polyimides de haute masse moléculaire, cyclisés, qui sont solubles dans la N-méthylpyrrolidone ou les solvants phénoliques. Lorsque ces polymères sont chauffés à 275 °C, les enchaînements alcool secondaire du benzhydrol subissent une réaction de dismutation qui conduit à des polyimides insolubles contenant des enchaînements cétone et méthylène (Proceedings of Second International Conference on polyimides; Polyimides: Synthesis, Characterization and Application, Ellenville, USA, 1985, page 74).

Les polyimides sont parmi les polymères thermostables ceux qui connaissent le plus de développement dans le domaine de l'électronique où ils sont utilisés comme adhésifs, comme films isolants intermétalliques, comme barrière de protection contre l'humidité, les agents chimiques et le rayonnement alpha et dans de nombreuses autres applications. Dans l'élaboration de structures complexes sur les semiconducteurs, certaines techniques font appel à des procédés de gravure humide dans lesquels les films ou revêtements de polyimides doivent être dissous dans des solutions basiques aqueuses. Les solutions de polyamide-acides mentionnées précédemment peuvent être employées pour ces applications. Mais outre leur instabilité dans le temps et leur sensibilité à l'hydrolyse, elles sont d'une mise en oeuvre extrêmement délicate dans les procédés de gravure humide. En effet, avant l'opération de gravure il est indispensable de réaliser une cyclisation partielle du polyamide-acide en polyimide pour pouvoir contrôler le processus de gravure. Si le polymère est faiblement cyclisé, la vitesse de dissolution est trop grande et inversement lorsque l'imidation est trop forte, la gravure par les bases est trop lente.

Les polyimides aromatiques cyclisés qui ont été rendus solubles dans des solvants organiques par une

modification structurale comme l'insertion d'un réactif à base de benzhydrol ont en général une bonne stabilité au stockage. Par contre, il ne sont pas sensibles à la gravure humide en milieu basique telle qu'elle est actuellement pratiquée dans les opérations de microlithographie. Ces observations montrent qu'il existe un besoin industriel pour un polymère thermostable qui présenterait les caractéristiques suivantes :

a) le polymère doit être soluble à l'état cyclisé;

b) le polymère doit se graver par voie humide en milieu basique; et

c) après le traitement de gravure, le polymère doit, au cours des différents traitements thermiques qui lui sont appliqués, devenir insoluble dans les bases et les solvants organiques.

On a découvert, et c'est l'un des objets de la présente invention, de nouvelles compositions de polybenzhydrolimides qui répondent à ces trois exigences et qui ont en particulier la propriété de devenir insolubles dans les bases par un traitement thermique à haute température.

L'invention a plus particulièrement pour objet des compositions de polybenzhydrolimides ou de copolybenzhydrolimides solubles, préparées en faisant réagir au moins un composé de formule générale

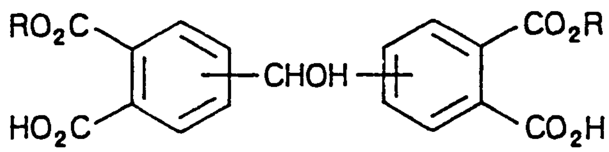

(1)

avec au moins une diamine aromatique biprimaire de formule générale

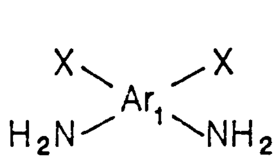

(2a) ou

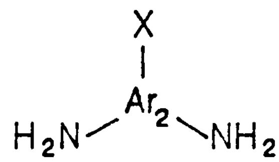

(2b)

La réaction de polycondensation en solution conduit à des polybenzhydrolimides cyclisés en utilisant les conditions expérimentales qui sont décrites ci-après.

Dans la formule (1), R est un radical monovalent d'hydrocarbure renfermant de préférence de 1 à 13 atomes de carbone, par exemple alcoyle inférieur, cycloalcoyle ou aryle.

L'enchaînement alcool secondaire qui sépare les deux cycles aromatiques du composé de formule générale (1) est placé au milieu des liaisons carbone-carbone de ces cycles pour indiquer la présence d'isomères.

Dans les formules (2a) et (2b), les radicaux $Ar_1$ et $Ar_2$ sont respectivement un radical aromatique tétravalent et un radical aromatique trivalent carbocycliques ou hétérocycliques, dont les valences sont sur des atomes de carbone distincts. Deux des valences sont occupées par les fonctions amine primaire et la ou les valences restantes sont substituées par des groupements hydroxyles ou par des fonctions acides carboxyliques. Dans le premier cas ces composés sont des diaminophénols aromatiques et dans le second cas ce sont des diaminoacides carboxyliques aromatiques.

Les radicaux $Ar_1$ et $Ar_2$ peuvent être formés chacun d'un cycle ou de plusieurs cycles, qui sont alors accolés ou reliés entre eux, chaque cycle étant formé de préférence de 5 à 7 atomes dont une partie peut consister en atomes d'oxygène, de soufre et/ou d'azote.

Lorsque les radicaux $Ar_1$ et $Ar_2$ comportent plusieurs cycles reliés entre eux, les éléments de liaison sont par exemple la liaison simple ou l'un des atomes ou groupements suivants :

-O-; -S- : -SO- ; $-SO_2-$ ; -CO- ; $-CH_2-$ ; $-CF_2-$ ; $-C(CH_3)_2-$ ; $-C(CF_3)_2-$ ; -COO- ; -CONH- ; $-Si(CH_3)_2-$ ; $-O-Si-(CH_3)_2-O-$ .

X est choisi parmi les groupements hydroxyle et acide carboxylique.

Parmi les composés de formule (1) qui conviennent pour la préparation des compositions de polybenzhydrolimides selon la présente invention, on peut citer les diesters de méthyle, d'éthyle, d'isopropyle, de n-butyle, d'isobutyle, de tertio-butyle, de néopentyle, d'octyle, de cyclohexyle, de trifluoroéthyle et d'hydroxy-2 éthyle de l'acide benzhydrol tétracarboxylique-3,3',4,4'.

Parmi les diamines aromatiques biprimaires de formule générale (2a) ou (2b) qui sont substituées par des goupements hydoxyle, on peut citer le diamino-2,4 phénol, le diamino-3,5 phénol, le diamino-2,4 méthyl-3 phénol, le diamino-2,4 méthyl-5 phénol, le diamino-2,6 méthyl-4 phénol, le diamino-3,3' dihydroxy-4,4' biphényle-1,1', la méthylène bis(hydroxy-2 benzèneamine)-3,3', la méthylène bis(hydroxy-4 benzèneamine)-3,3', la méthylène bis(hydroxy-2 benzèneamine)-4,4', la méthylène bis(hydroxy-2 benzèneamine)-5,5', la méthyl-1 éthylidène bis(hydroxy-2 benzèneamine)-5,5', la trifluorométhyl-1 trifluoro-2,2,2 éthylidène bis-(hydroxy-2 benzèneamine)-5,5', la carbonyl bis(hydroxy-2 benzèneamine)-5,5', l'oxy bis(hydroxy-2 benzèneamine)-5,5', la thio bis(hydroxy-2 benzèneamine)-5,5' et la sulfonyl bis(hydroxy-2 benzèneamine)-5,5'.

Parmi les diamines de formule (2a) ou (2b) contenant des fonctions acide carboxylique qui conviennent pour la présente invention on peut citer l'acide diamino-2,4 benzoïque, l'acide diamino-3,5 benzoïque, l'acide diamino-4,6 isophtalique, l'acide diamino-2,5 téréphtalique, l'acide diamino-4,4' biphényle-1,1' dicarboxylique-3,3', l'acide méthylène bis(amino-2 benzènecarboxylique)-5,5', l'acide méthyl-1 éthylidène bis(amino-2 benzènecarboxylique)-5,5', l'acide trifluorométhyl trifluoro-2,2,2 éthylidène bis(amino-2 benzènecarboxylique)-5,5', l'oxy bis(amino-2 benzènecarboxylique)-5,5', l'acide amino-2 aminophénoxy-5 benzènecarboxylique.

La préparation des compositions de polybenzhydrolimides de l'invention peut faire intervenir en plus des réactifs de formules générales (1) et (2a, 2b), d'autres constituants dérivés d'acides aromatiques carboxyliques répondant aux formules générales suivantes :

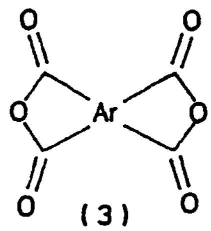
(3)

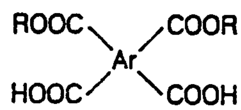
(4)

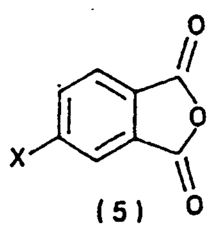
(5)

et d'autres diamines aromatiques biprimaires de formule générale

$H_2N - Ar' - NH_2$ (6)

Dans les formules (3) et (4), le radical Ar est un radical aromatique tétravalent, carbocyclique ou hétérocyclique, dont les valences sont sur des atomes de carbone distincts qui sont situés deux par deux en position ortho ou péri et le radical R est défini comme plus haut pour la formule (1).

Dans la formule (5), X est défini comme plus haut pour la formule (2a) ou (2b).

Dans la formule (6), le radical Ar′ est un radical aromatique divalent, carbocyclique ou hétérocyclique, dont les valences sont sur des atomes de carbone distincts qui, de préférence ne sont pas situés en position ortho l'un par rapport à l'autre.

Comme les radicaux $Ar_1$ et $Ar_2$ des formules (2a) et (2b), les radicaux Ar et Ar′ peuvent être formés chacun d'un cycle ou de plusieurs cycles, qui sont alors accolés ou reliés entre eux, chaque cycle étant formé de préférence de 5 à 7 atomes dont une partie peut consister en atomes d'oxygène, de soufre et/ou d'azote.

Lorsque les radicaux Ar et Ar′ comportent plusieurs cycles reliés entre eux, les éléments de liaison sont par exemple la liaison simple ou l'un des atomes ou groupements suivants:
-O- ; -S- ; -SO- ; $-SO_2-$ ; -CO- ; $-CH_2-$ ; $-CF_2-$ ; $-C(CH_3)_2-$ ; $-C(CF_3)_2$ ; - COO- ; -CONH- ; $-Si(CH_3)_2-$ ; $-O-Si-(CH_3)_2-O-$.

Parmi les composés tétracarboxyliques de formule (3) on peut citer les dianhydrides des acides aromatiques suivants : l'acide benzène tétracarboxylique-1,2,3,4, l'acide benzène tétracarboxylique-1,2,4,5, l'acide biphényle-1,1′ tétracarboxylique-2,3,5,6, l'acide biphényle-1,1′ tétracarboxylique-3,3′,4,4′, l'acide biphényle-1,1′ tétracarboxylique-2,2′,3,3′, l'acide terphényle-1,1′,1″ tétracarboxylique-2′,3′,5′,6′, l'acide naphtalène tétracarboxylique-1,2,5,6, l'acide naphtalène tétracarboxylique-2,3,6,7, l'acide naphtalène tétracarboxylique-1,2,4,5, l'acide naphtalène tétracarboxylique-1,4,5,8, l'acide pérylène tétracarboxylique-3,4,9,10, l'acide phénanthrène tétracarboxylique-1,8,9,10, l'acide oxybis(benzène dicarboxylique-1,2)-4,4′, l'acide thiobis(benzène dicarboxylique-1,2)-4,4′, l'acide sulfonylbis(benzène dicarboxylique-1,2)-4,4′, l'acide methylènebis(benzène dicarboxylique-1,2)-4,4′, l'acide difluoromethylènebis(benzène dicarboxylique-1,2)-4,4′, l'acide carbonylbis(benzène dicarboxylique-1,2)-3,3′, l'acide carbonylbis(benzène dicarboxylique-1,2)-4,4′, l'acide méthyl-1 éthylidène-1,1-bis(benzène dicarboxylique-1,2)-4,4′, l'acide trifluorométhyl-1 trifluoro-2,2,2 éthylidène-1,1-bis(benzène dicarboxylique-1,2)-4,4′, l'acide phénylène-1,3-bis(carbonylbenzène dicarboxylique-1,2)-4,4′, l'acide phénylène-1,4-bis(carbonylbenzène dicarboxylique-1,2)-4,4′, l'acide phénylène-1,3-bis(oxybenzène dicarboxylique-1,2)-4,4′, l'acide phénylène-1,4-bis(oxybenzène

dicarboxylique-1,2)-4,4′, l'acide méthyl-1 éthylidène-1,1-bis(phénylène-1,4-oxy)-bis(benzène dicarboxylique-1,2)-4,4′, l'acide pyrazine tétracarboxylique-2,3,5,6, l'acide thiophène tétracarboxylique-2,3,4,5 et le tétracarboxy-3,3′,4,4′ benzanilide.

On citera aussi à titre d'exemples de composés de formule (4), les bis(ortho-acides-esters) d'alcoyle préparés par réaction des anhydrides de formule générale (3) sur des alcools aliphatiques, comme par exemple les esters de méthyle, d'éthyle, d'isopropyle de n-butyle, de tertio-butyle, de néopentyle, d'octyle, de trifluorométhyle, d'hydroxy-2 éthyle et de cyclohexyle.

Parmi les composés de formule (5) qui conviennent pour la présente invention, on peut citer l'anhydride de l'acide benzène tricarboxylique 1,2,4, l'anhydride de l'acide benzène tricarboxylique-1,2,3 et l'anhydride de l'acide diphényléther tricarboxylique-3,4,4′.

Parmi les diamines aromatiques biprimaires de formule générale (6), on peut citer la benzènediamine-1,3, la benzènediamine-1,4, la méthyl-6 benzènediamine-1,3, la méthyl-2 benzènediamine-1,3, la méthyl-5 benzènediamine-1,3, le diamino-4,4′ biphényle-1,1′, le diamino-4,4′ diméthyl-3,3′ biphényle-1,1′, le diamino-4,4′ diméthoxy-3,3′ biphényle-1,1′, le diamino-4,4′ dichloro-3,3′ biphényle-1,1′, la méthylènebis-(benzèneamine)-4,4′, la méthylènebis(benzèneamine)-3,3′, la méthylènebis(méthyl-3 benzèneamine)-4,4′, la méthylènebis(isopropyl-3 benzèneamine)-4,4′, l'oxybis(benzèneamine)-4,4′, l'oxybis(benzèneamine)-3,3′, la carbonylbis(benzèneamine)-4,4′, la carbonylbis(benzèneamine)-3,3′, la thiobis(benzèneamine)-4,4′, la thiobis(benzèneamine)-3,3′, la sulfonylbis(benzèneamine)-4,4′, la sulfonylbis(benzèneamine)-3,3′, l'hydroxyméthylènebis(benzèneamine)-4,4′, l'hydroxyméthylènebis(benzèneamine)-3,3′, la difluorométhylènebis(benzèneamine)-4,4′, la methyl-1 éthylidène bis(benzèneamine)-4,4′, la trifluoromethyl-1 trifluoro-2,2,2 éthylidène bis(benzèneamine)-4,4′, la phénylène-1,3-dioxy bis(benzèneamine)-3,3′, la phénylène-1,3-dioxy bis(benzèneamine)-4,4′, la phénylène-1,4-dioxy bis(benzèneamine)-3,3′, la phénylène-1,4-dioxy bis(benzèneamine)-4,4′, le diamino-3,3′ benzanilide, le diamino-3,4′ benzanilide, le diamino-3′,4 benzanilide, le diamino-4,4′ benzanilide, le bis(amino-3 phényl) diméthylsilane et le le bis(amino-4 phényl) diméthylsilane.

Dans le mode de mise en oeuvre préféré, on prépare une composition de polybenzhydrolimides ou de copolybenzhydrolimides en dissolvant dans un solvant approprié les réactifs engagés dans la réaction de polycondensation. Ces réactifs peuvent être introduits simultanément ou dans un ordre déterminé. Les proportions des différents réactifs ne sont pas critiques par rapport à la stoechiométrie de la réaction. Cette dernière est réalisée lorsque le mélange de réactifs contient une mole de diamine aromatique biprimaire et une mole de réactif antagoniste de type acideester ou anhydride.

Ce sont naturellement les proportions stoechiométriques qui donnent les polymères de plus haute masse moléculaire, mais d'une façon générale, pour une mole de l'ensemble des composés des formules (1, 3, 4, et 5), on utilise de 0,5 à 2 moles de l'ensemble des composés des formules (2a, 2b et 6), la proportion molaire du composé de formule (1) représentant 51 à 100% de la proportion molaire de l'ensemble des composés des formules (1, 3, 4 et 5) et la proportion molaire des composés des formules (2a et 2b) représentant de 51 à 100% de la proportion molaire de l'ensemble des composés des formules (2a, 2b et 6).

Si l'on opère avec un excès de l'une ou l'autre classe de réactifs (1) et (2a, 2b) et éventuellement (3) à (6), on peut stabiliser le polymère à la masse moléculaire désirée en bloquant la réaction par la mise en jeu d'un réactif monofonctionnel

- par exemple un anhydride ou un hémiester phtalique (ou phtalique substitué) si le polymère est préparé avec un excès de diamine (2a, 2b) et éventuellement (6);
- par exemple l'aniline (ou une aniline substituée), lorsque le polymère est préparé avec un excès de groupements orthodicarboxyliques (1) et éventuellement (3) et (4).

Le mélange réactionnel formé par le solvant et les réactifs est ensuite chauffé à une température avantageusement supérieure à 80 °C, de préférence comprise entre 100 °C et 250 °C, de façon à effectuer la réaction de polycondensation et la réaction de cyclisation en imide. La formation du polymère est suivie par la mesure de sa viscosité inhérente qui est en générale comprise entre 0,1 et 2,5 $dl.g^{-1}$. La réaction d'imidation est suivie d'une part par la mesure des composés volatils (eau et alcool) qui sont éliminés et d'autre part par les méthodes d'analyse spectroscopique dans l'infrarouge et la résonance magnétique nucléaire.

Les solvants utilisables avec lesquels on prépare les compositions de polyimides de l'invention sont des composés organiques polaires, c'est à dire renfermant un hétéroatome tel que l'oxygène, l'azote, le soufre ou le phosphore, inertes vis à vis des monomères et des polymères. Parmi ces solvants on peut citer les phénols, les halogénophénols, les mono et diéthers de glycols, comme par exemple ceux de l'éthylèneglycol et du diéthylèneglycol, les mono et diesters de glycols, comme par exemple ceux de l'éthylèneglycol et du diéthylèneglycol, les amides comme par exemple le N-méthylformamide, le N,N-diméthylformamide, le

N-méthylacétamide, le N,N-diméthylacétamide, l'hexaméthylphosphotriamide, les urées, comme par exemple la tétraméthylurée, les composés hétérocycliques, comme par exemple la pyridine, la quinoléine, la dioxanne, le tétrahydrofuranne, la N-méthylpyrrolidinone-2, la N-acétylpyrrolidinone-2, la N-cyclohexylpyrrolidinone-2, la tétraméthylène sulfone, les sulfones et les sulfoxydes, comme par exemple la diméthylsulfone et le diméthylsulfoxyde.

Ces solvants peuvent être utilisés seuls ou mélangés entre eux, ou encore en mélange avec d'autres composés organiques liquides parmi lesquels on peut citer les alcools, tels que le méthanol, l'éthanol, le propanol, l'isopropanol, les butanols, le cyclohexanol, les méthylcyclohexanols, l'alcool benzylique; les cétones comme par exemple l'acétone, la butanone-2, la diisopropylcétone, la cyclohexanone, les méthylcyclohexanones, l'acétophénone; les hydrocarbures aromatiques, comme par exemple le benzène, le toluène, les xylènes, le solvant naphta; les hydrocarbures aromatiques halogénés, tels que le chlorobenzène, les dichlorobenzène, les chlorotoluènes; les esters aliphatiques et aromatiques des acides carboxyliques aliphatiques et aromatiques, comme par exemple les acétates de méthyle, d'éthyle, d'isopropyle, de butyle, de phényle, le benzoate de méthyle; des éthers, comme l'éther de dibutyle, l'éther de diphényle.

La concentration initiale des monomères dans le solvant de réaction n'est pas critique mais elle est généralement comprise entre 10% et 80% en poids. En cours de réaction, la concentration de la composition résineuse est ajustée à une valeur telle que la solution ait une viscosité dynamique bien adaptée à l'utilisation envisagée. En d'autres termes, la concentration finale dépend de la masse moléculaire, de la structure chimique du polymère, de la nature du solvant et de la température de mise en oeuvre. Pour les applications où le solvant de préparation des polymères ne convient pas, les compositions de l'invention peuvent être isolées à l'état solide par précipitation dans un non solvant comme l'eau, l'éther diéthylique ou le méthanol. Elles sont ensuite redissoutes dans un autre solvant ou dans un autre mélange de solvants.

La température de la réaction de polycondensation peut varier dans un très large domaine, entre 80 °C et 300 °C. Elle est généralement fixée à une valeur telle que la réaction des fonctions amine sur les diesters dérivés de l'acide benzhydrol tétracarboxylique s'effectue à une vitesse raisonnable. Selon le solvant et les réactifs utilisés, une température comprise entre 100 °C et 250 °C donne généralement de bons résultats. Les produits volatils, eau et alcool, formés en cours de réaction peuvent être laissés dans le milieu, mais ils peuvent également être éliminés par distillation au fur et à mesure de leur formation, ce qui permet de contrôler l'avancement de la réaction.

Les compositions de polybenzhydrolimides de l'invention sont préparées dans des conditions de température et du durée de réaction qui permettent d'atteindre un degré d'avancement et un taux de cyclisation en imide importants qui dépendent de l'application envisagée et du mode de mise en oeuvre.

Un taux de conversion élevé présente l'avantage de ne laisser dans le milieu réactionnel que des quantités pondérales extrêmement faibles des réactifs de départ et d'augmenter la stabilité au stockage des solutions. Cette stabilité est en effet plus grande lorsque le polymère est fortement imidé.

Les compositions de polybenzhydrolimides ou de copolybenzhydrolimides de l'invention présentent l'avantage d'être solubles dans de nombreux solvants organiques. Ces solutions sont en général destinées à la fabrication de films ou de revêtements protecteurs dont l'épaisseur peut varier de quelques centaines d'angström à quelques centaines de micromètres. Après enduction du substrat, le solvant est évaporé à la pression atmosphérique ou sous pression réduite à une température qui dépend de la nature de ce solvant.

La température de séchage doit être de préférence inférieure à 300 °C si les films ou les revêtements de polyimides doivent subir une opération de gravure par les bases. Les compositions de l'invention comportent en effet le long de leur chaîne macromoléculaire des groupements hydroxyle phénolique ou acide carboxylique qui sont transformés, en milieu basique, en sels solubles. Lorsque le polymère salifié passe en solution il se produit également une attaque des cycles imides qui sont instables en milieu basique homogène.

Après l'étape de gravure humide par les bases, les parties du polymère qui n'ont pas été détruites par la solution de gravure peuvent être stabilisées par un traitement thermique à haute température. Après un chauffage de quelques heures à une température avantageusement supérieure à 250 °C et de préférence comprise entre 275 °C et 350 °C, les revêtements préparés à partir des polymères de l'invention deviennent insolubles dans les bases dans les conditions généralement utilisées pour graver les films de polyimides. Les réactions chimiques qui transforment les polymères solubles en polymères insolubles ne sont pas faciles à identifier mais elles conduisent à des structures plus rigides soit par transformation de certains groupes dans la chaîne macromoléculaire, soit également par une série de réactions de réticulation entre les différentes chaînes.

L'invention sera décrite de façon plus précise en liaison avec les exemples spécifiques ci-après dans lesquels les détails sont donnés à titre illustratif et non limitatif.

Dans ces exemples, les réactions de polycondensation sont effectuées sous agitation et en atmosphère inerte pour éviter l'oxydation des amines aromatiques. Dans ces exemples, les viscosités inhérentes sont mesurées à 30 ° C pour une concentration de 5 à 10 grammes de polymère dans un litre de N-méthylpyrrolidinone-2. Pour simplifier l'écriture des noms de produits chimiques, les mélanges de composés isomères sont désignés par un terme au singulier comme par exemple le diester de méthyle de l'acide benzhydrol tétracarboxylique-3,3′,4,4′.

La présence des enchaînements imides cycliques dans les polymères solubles obtenus lorsqu'on opère comme décrit dans les exemples sont l'invention a été déterminée par les méthodes d'analyse classique : analyse élémentaire, réaction à l'hydrate d'hydrazine, spectroscopie dans l'infrarouge, résonance magnétique nucléaire du proton et du carbone-13 et analyse thermogravimétrique dynamique et isotherme.

Exemple 1

Un réacteur de polycondensation est chargé avec 140,789 grammes (0,545 mole) de bis(amino-3 hydroxy-4 phényl)-2,2 propane, 211,584 grammes (0,532 mole) de diester de méthyle de l'acide benzhydrol tétracarboxylique-3,3′,4,4′ et 243,73 grammes de N-méthyl pyrrolidinone-2. Le mélange, agité sous un courant d'azote, est chauffé depuis la température ambiante jusqu'à 160 ° C en 45 minutes. Le programme de chauffage est ensuite de 70 minutes à 160 ° C, 40 minutes à 170 ° C et 60 minutes à 190 ° C. Le milieu réactionnel est alors dilué par addition de 24,4 grammes de N-méthyl pyrrolidinone-2 et la réaction de polycondensation est poursuivie pendant 4 heures à 200 ° C. La solution refroidie est versée lentement dans de l'eau distillée. Le précipité qui se forme est broyé dans l'eau à l'aide d'un broyeur à couteaux tournant à grande vitesse. Il est ensuite isolé par filtration et séché à 100 ° C sous pression réduite pendant 24 heures. La quantité de polymère obtenue est de 290 grammes. Il a une viscosité inhérente de 0,72 dl/g et une température de transition vitreuse de 212 ° C, mesurée par pénétrométrie.

Exemple 2

Un réacteur de polycondensation est chargé avec 184,4 grammes (0,714 mole) de bis(amino-3 hydroxy-4 phényl)-2,2 propane, 70,76 grammes (0,357 mole) de bis(amino-4 phényl) méthane, 400 grammes (1,03 mole) de diester de méthyle de l'acide benzhydrol tétracarboxylique-3,3′,4,4′ et 427,9 grammes de N-méthyl pyrrolidinone-2. Le mélange, agité sous un courant d'azote, est chauffé depuis la température ambiante jusqu'à 130 ° C en 25 minutes. Le programme de chauffage est ensuite de 30 minutes à 130 ° C et 80 minutes à 160 ° C. Le mélange est refroidi jusqu'à la température ambiante et après addition de 15,8 grammes d'anhydride trimellitique et de 300 grammes de N-méthyl pyrrolidinone-2, il est de nouveau chauffé pendant 30 minutes à 160 ° C, 40 minutes à 180 ° C et 2 heures à 200 ° C. La solution refroidie est versée lentement dans de l'eau distillée. Le précipité qui se forme est broyé dans l'eau à l'aide d'un broyeur à couteaux tournant à grande vitesse. Il est lavé plusieurs fois à l'eau puis au méthanol et il est ensuite isolé par filtration et séché à 95 ° C sous pression réduite pendant 24 heures. La quantité de copolymère obtenue est de 570 grammes. Il a une viscosité inhérente de 0,38 dl/g, mesurée à 30 ° C pour une concentration en polymère de 0,844 g/dl dans la N-méthyl pyrrolidinone-2.

Exemple 3

Un réacteur de polycondensation de 1 litre équipé d'une agitation mécanique, d'une entrér d'argon, d'une ampoule d'addition et d'une tête de colonne à distiller est chargé avec 45 grammes (0,296 mole) d'acide diamino-3,5 benzoïque, 112,514 grammes (0,29 mole) de diester de méthyle de l'acide benzhydrol tétracarboxylique-3,3′,4,4′ et 103,49 grammes de N-méthyl pyrrolidinone-2. Le mélange, agité sous un courant d'azote, est chauffé depuis la température ambiante jusqu'à 140 ° C en 1 heure. Le programme de chauffage est ensuite de 2 heures à 140 ° C, 1 heure à 160 ° C, 3 heures à 180 ° C et 1 heure à 190 ° C. En cours de réaction, la viscosité de la solution est abaissée par addition de petites quantités de N-méthyl pyrrolidinone-2 de façon à permettre l'agitation du mélange qui devient très visqueux. A la fin de la réaction, le milieu réactionnel est encore dilué par addition de N-méthyl pyrrolidinone-2 et la solution refroidie est versée lentement dans de l'eau distillée. Le précipité qui se forme est broyé dans l'eau à l'aide d'un broyeur à couteaux tournant à grande vitesse. Il est ensuite isolé par filtration, lavé plusieurs fois à l'eau et séché à 100 ° C sous pression réduite pendant 24 heures. Le rendement en produit sec est de 290 grammes. Le polymère obtenu a une viscosité inhérente de 0,52 dl/g et une température de transition vitreuse de 280 ° C

Exemple 4

Les conditions expérimentales de l'exemple 3 sont utilisées pour faire réagir 112,514 grammes (0,29 mole) de diester de méthyle de l'acide benzhydrol tétracarboxylique-3,3′,4,4′ et 81,32 grammes (0,299 mole) d'acide diamino-4,4′ biphényl-1,1′ dicarboxylique-3,3′ en solution dans 105 grammes de N-méthyl pyrrolidinone-2. Le polymère obtenu à la fin de la réaction de polycondensation a une viscosité inhérente de 0,78 dl/g et une température de transition vitreuse supérieure à 300 °C

Exemple 5

Un réacteur de polycondensation est chargé avec 16,49 grammes (0,0606 mole) d'acide diamino-4,4′ biphényl-1,1′ dicarboxylique-3,3′, 12,30 grammes (0,062 mole) de bis(amino-4 phényl) méthane, 40,04 grammes (0,1031 mole) de diester de méthyle de l'acide benzhydrol tétracarboxylique-3,3′,4,4′ et 36,82 grammes de N-méthyl pyrrolidinone-2. Le mélange, agité sous un courant d'azote, est polymérisé en suivant le programme de chauffage indiqué dans l'exemple 3. Le copolyimide obtenu a une viscosité inhérente de 0,2 dl/g.

Exemple 6

On reproduit les conditions expérimentales de l'exemple 3 en remplaçant l'acide diamino-3,5 benzoïque par 85,59 grammes d'acide diamino-4,4′ biphényle-1,1′ dicarboxylique-3,3′ (0,299 mole). Le polyimide obtenu à la fin de la réaction a une viscosité inhérente de 0,71 dl/g.

Exemple 7

Les conditions expérimentales de l'exemple 3 sont utilisées avec les réactifs suivants : 23,24 grammes d'une solution à 52,09% en poids du diester de méthyle de l'acide benzhydrol tétracarboxylique-3,3′,4,4′ dans la N-méthyl pyrrolidinone-2, 3,35 grammes de dianhydride de l'acide benzophénone tétracarboxylique-3,3′,4,4′ et 11,65 grammes d'acide diamino-4,4′ biphényle-1,1′ dicarboxylique-3,3′. Le polyimide obtenu à la fin de la réaction a une viscosité inhérente de 0,5 dl/g.

Exemple 8

Les propriétés de solubilité des compositions de polybenzhydrolimides ou de copolybenzhydrolimides décrites dans les exemples précédents sont étudiées sur des films préparés à partir de solutions dans la N-méthyl pyrrolidinone-2. Ces films, obtenus par coulée sur une plaque de verre, ont après séchage une épaisseur de l'ordre de 10 micromètres. La solubilité des films de polymères est mesurée à la température ambiante en utilisant comme solution basique une solution aqueuse d'hydroxyde de sodium normale ou décinormale. Les caractéristiques de solubilité ou d'insolubilité des films de polymères sont indiquées dans le tableau suivant:

TABLEAU

| Solubilité des polyimides dans la soude | | | | | | | | |
|---|---|---|---|---|---|---|---|---|
| Solution basique* | Traitement thermique** | Solubilité ***des polyimides de l'exemple | | | | | | |
| | | 1 | 3 | 4 | 5 | 6 | 7 | Ref**** |
| N | I | + + | + + | + + | + + | + + | + + | - |
| N | II | - | - | - | - | - | - | - |
| 0,1N | I | + | + | + | + | + | + | - |
| 0,1N | II | - | - | - | - | - | - | - |

* N = solution aqueuse de soude normale, 0,1N = solution aqueuse de soude décinormale.

** Traitement thermique des films avant les tests de dissolution dans la soude.

I : Chauffage à 210 ° C pendant 5 heures, II : Chauffage à 300 ° C pendant 3 heures.

*** Tests de solubilité : + + soluble en moins de 5 minutes, + soluble en moins d'une heure, - insoluble au bout d'une heure.

**** Le polyimide de référence est un polymère de haute masse moléculaire préparé par réaction du bis(amino-4 phényl) méthane avec le diester de méthyle de l'acide benzophénone tétracarboxylique-3,3′,4,4′.

La présence de groupes hydroxyles ou acides carboxyliques libres le long de la chaîne macromoléculaire des compositions de polybenzhydrolimides de l'invention confère aux polymères une bonne solubilité dans la soude lorsque les films ont été recuits à 210 ° C. Par contre, un traitement thermique à plus haute température (300-350 ° C) rend le polymère insoluble à la suite de réactions de transformations chimiques et/ou de réticulation.

**Revendications**

**1.** Composition de polymide, caractérisée en ce qu'elle consiste en le produit de la réaction de polycondensation entre

(a) au moins un réactif à fonctions carboxyliques consistant en 51 à 100% en moles d'au moins un diester de formule générale

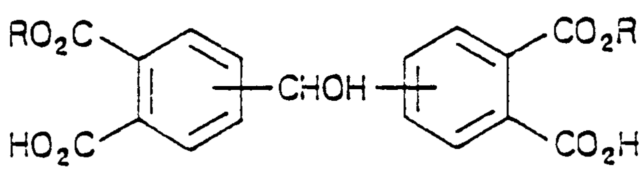

(1)

dans laquelle R est un radical monovalent d'hydrocarbure, et en 0 à 49% en moles d'au moins un composé ayant l'une des formules

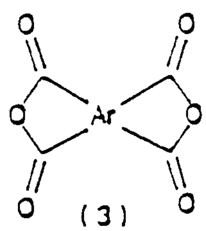

(3)

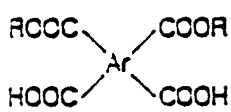

(4)

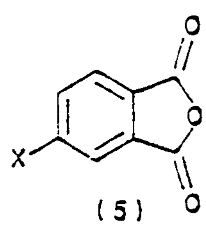

(5)

où Ar est un radical aromatique tétravalent, carbocyclique ou hétérocyclique, dont les valences sont sur des atomes de carbone distincts situés deux par deux en position ortho ou péri, R est défini comme plus haut et X est un groupe carboxyle ou hydroxyle, et (b) au moins un réactif à fonction amines

primaires consistant en 51 à 100% en moles d'au moins une diamine aromatique biprimaire de formule générale

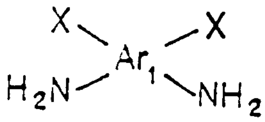 ( 2a ) ou 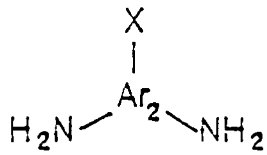 ( 2b )

dans laquelle $Ar_1$ est un radical aromatique tétravalent, carbocyclique ou hétérocyclique, dont les valences sont sur des atomes de carbone distincts, $Ar_2$ est un radical aromatique trivalent, carbocyclique ou hétérocyclique dont des valences sont sur des atomes de carbone distincts, X est choisi dans le groupe formé par le groupe carboxyle (-COOH) et le groupe hydroxyle (-OH), et en 0 à 49 % en moles d'au moins une diamine aromatique biprimaire de formule générale

$H_2N - Ar' - NH_2$ (6)

où Ar' est un radical aromatique divalent, carbocyclique ou hétérocyclique, dont les valences sont sur des atomes de carbone distincts.

2. Composition selon la revendication 1, caractérisé en ce que, lors de la réaction de polycondensation, on met en jeu de 0,5 à 2 moles de réactif (b) par mole de réactif (a) et on opère dans un solvant, avec une concentration des réactifs dans le solvant de 20 à 80% en poids, et à une température de 80 à 300 ° C.

3. Composition selon l'une des revendications 1 et 2, caractérisée en ce que l'on opère à une température de 100 à 250 ° C.

4. Composition selon l'une des revendications 1 à 3, caractérisée en ce que R, dans les formules (1) et (4), représente un radical alcoyle inférieur, cycloalcoyle ou aryle de 1 à 13 atomes de carbone, $Ar_1$ dans la formule (2a), $Ar_2$ dans la formule (2b), Ar dans la formule (4) et Ar' dans la formule (6) sont formés chacun d'un cycle ou de plusieurs cycles accolés ou reliés entre eux par une liaison simple ou e[1] un des atomes ou groupements divalents suivants -O- ; -S- ; -SO- ; $-SO_2-$ ; -CO- ; $-CH_2-$ ; $-CF_2-$ ; $-C(CH_3)_2-$ ; $-C(CF_3)_2-$ ; -COO- ; -CONH- ; $-Si(CH_3)_2-$ ; $-O-Si(CH_3)_2-O-$, et renfermant chacun de 5 à 7 atomes.

5. Composition selon l'une des revendications 1 à 4, caractérisée en ce que, dans la réaction de polycondensation, l'on met en jeu un excès par rapport à la stoechiométrie des réactifs (a) et on bloque la réaction en mettant en jeu un réactif monofonctionnel choisi parmi l'aniline et les anilines substituées.

6. Composition selon l'une des revendications 1 à 5, caractérisée en ce que, dans la réaction du polycondensation, l'on met en jeu un excés par rapport à la stoechiométrie des réactifs (b) et on bloque la réaction en mettant en jeu un réactif monofonctionnel choisi parmi les anhydrides et les hémiesters d'acide phtalique et d'acides phtaliques substitués.

7. Composition selon l'une des revendications 1 à 6, mise sous la forme d'un film ou d'un revêtement.

8. Méthode de gravure d'un film ou d'un revêtement selon la revendication 7, caractérisée en ce que l'on soumet ledit film ou ledit revêtement à une attaque par une solution aqueuse basique.

9. Méthode selon la revendication 8, caractérisée en ce que ledit film ou ledit revêtement est au préalable séché à une température inférieure à 300 ° C.

10. Méthode selon l'une des revendications 8 à 9, caractérisée en ce que, après gravure, le matériau est stabilisé par chauffage à une température supérieure à 250 ° C pendant quelques heures.

**Claims**

**1.** A polyimide composition characterized, in that it consists in the polycondensation reaction product of :
a) at least one reagent with carboxylic functions consisting in 51 to 100 molar % of at least one dister of the general formulae

(1)

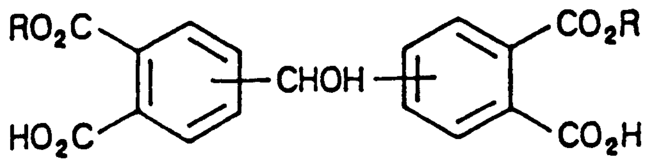

(1)

in which R is a monovalent hydrocarbon radical, and in 0 to 49 molar % of at least one compound having one of the formulae

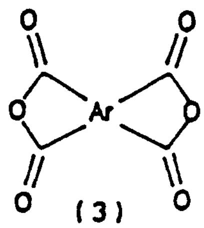

(3)

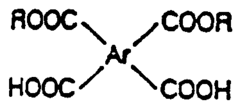

(4)

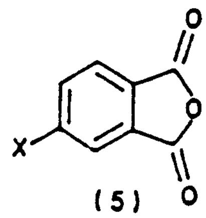

(5)

where Ar is a tetravalent, carbocyclic or heterocyclic aromatic radical, whose valencies are on separate carbon atoms situated in pairs in the ortho or peri position, R is defined as above and X is a carboxyl or hydroxyl group, with
b) at least one reagent with primary amino functions consisting in 51 to 100 molar % of at least one biprimary aromatic diamine of the general formulae

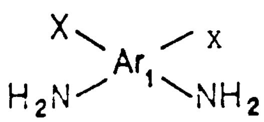

( 2a ) or

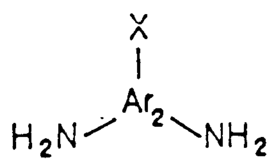

( 2b )

in which $Ar_1$ is a tetravalent, carbocyclic or heterocyclic aromatic radical, whose valencies are on separate carbon atoms, $Ar_2$ is a trivalent, carbocyclic or heterocyclic aromatic radical whose valencies are on separate carbon atoms, X is selected from the group formed by the carboxyl group (-COOH) and the hydroxyl group (-OH), and in 0 to 49 molar % of at least one biprimary aromatic diamine of the general formulae

$H_2N$ - Ar' - $NH_2$ (6)

where Ar' is a divalent, carbocyclic or heterocyclic aromatic radical, whose valencies are on separate carbon atoms.

**2.** A composition according to claim 1, characterized in that, during the polycondensation reaction, from 0.5 to 2 moles of reagent (b) are used per mole of reagent (a), while operating in a solvent with a concentration of the reagents in the solvent of 20 to 80% by weight and at a temperature of 80 to 300 ° C.

**3.** A composition according to one of claims 1 and 2, characterized in that, the reaction is operated at a temperature of 100 to 250 ° C.

**4.** A composition according to one of claims 1 to 3, characterized in that, in formulae (1) and (a), R represents a lower alkyl, a cycloalkyl or an aryl radical having from 1 to 13 carbon atoms, $Ar_1$ in formulae (2a), $Ar_2$ in formulae (2b), Ar in formulae (4) and Ar' in formulae (6) are each formed of one ring or several ring, fused or linked with other by a single bond or one of the following atoms or groups -O-; -S-; -SO-; $-SO_2-$; -CO-; $-CH_2-$; $CF_2-$; $-C(CH_3)2-$; $C(CF)_2-$; -COO-; -CONH-; $Si(CH_3)_2-$; $-O-Si(CH_3)_2-O-$, and containing each from 5 to 7 carbon atoms.

**5.** A composition according to one of claims 1 to 4, characterized in that, in the polycondensation reaction, an excess with respect to the stoichiometry of the reagents (a) is involved and the reaction is blocked by bringing into action a monofunctional reagent selected from aniline and substituted anilines.

**6.** A composition according to one of claims 1 to 5, characterized in that, in the polycondensation, an excess with respect to the stoichiometry of the reagents (b) is involved and the reaction is blocked by bringing into action a monofunctional reagent selected from anhydrides and hemiesters of phthalic acid and substituted phthalic acids.

**7.** A composition according to one of claims 1 to 6, shaped as a film or a coating.

**8.** A method for engraving a film or a coating according to claim 7, characterized in that said film or coating is sujected to an attack by a basic aqueous solution.

**9.** A method according to claims 8, characterized in that said film or coating is first being dried at a temperature lower than 300 ° C.

**10.** A method according to one of claims 8 to 9, characterized in that, after engraving, the material is being stabilized by heating at a temperature higher than 250 ° C for a few hours.

**Patentansprüche**

**1.** Polyimid-Zusammensetzung, dadurch gekennzeichnet, daß sie besteht aus dem Produkt der Polykondensationsreaktion zwischen

a) mindestens einem Reagens mit Carboxylfunktionen, das besteht
zu 51 bis 100 Mol-% aus mindestens einem Diester der allgemeinen Formel

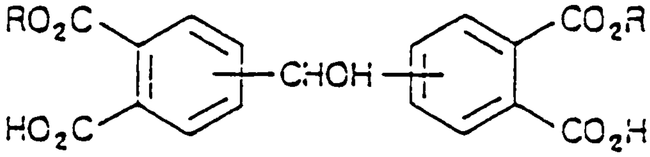

(1)

in der R einen monovalenten Kohlenwasserstoffrest darstellt, und
zu 0 bis 49 Mol-% aus mindestens einer Verbindung mit einer der Formeln

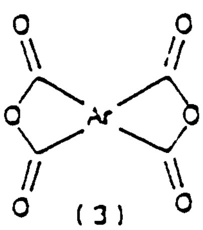

(3)

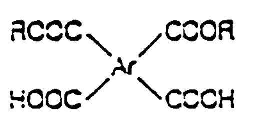

(4)

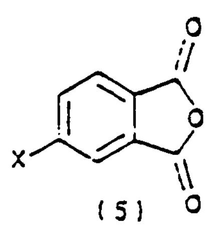

(5)

worin Ar einen tetravalenten carbocyclischen oder heterocyclischen aromatischen Rest darstellt, dessen Valenzen an unterschiedliche Kohlenstoffatome gebunden sind, die paarweise in ortho- oder peri-Position angeordnet sind, R wie oben definiert ist und X eine Carboxyl- oder Hydroxyl-Gruppe darstellt, und

b) mindestens einem Reagens mit primären Aminfunktionen, das besteht

zu 51 bis 100 Mol-% aus mindestens einem biprimären aromatischen Diamin der allgemeinen Formel

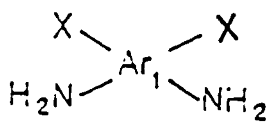

( 2a ) oder

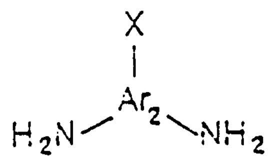

( 2b )

worin $Ar_1$ einen tetravalenten carbocyclischen oder heterocyclischen aromatischen Rest darstellt, dessen Valenzen an unterschiedliche Kohlenstoffatome gebunden sind, $Ar_2$ einen trivalenten carbocyclischen oder heterocyclischen aromatischen Rest darstellt, dessen Valenzen an unterschiedliche Kohlenstoffatome gebunden sind, X ausgewählt wird aus der Gruppe, die gebildet wird durch die Carboxylgruppe (-COOH) und die Hydroxylgruppe (-OH), und

zu 0 bis 49 Mol-% aus mindestens einem biprimären aromatischen Diamin der allgemeinen Formel

$H_2N - Ar' - NH_2$ (6)

worin Ar' einen divalenten carbocyclischen oder heterocyclischen aromatischen Rest darstellt, dessen Valenzen an unterschiedliche Kohlenstoffatome gebunden sind.

**2.** Zusammensetzung nach Anspruch 1, dadurch gekennzeichnet, daß man bei der Polykondensationsreaktion 0,5 bis 2 Mol Reagens (b) pro Mol Reagens (a) einsetzt und daß man in einem Lösungsmittel mit einer Konzentration der Reagentien in dem Lösungsmittel von 20 bis 80 Gew.-% und bei einer Temperatur von 80 bis 300 ° C arbeitet.

**3.** Zusammensetzung nach einem der Ansprüche 1 und 2, dadurch gekennzeichnet, daß man bei einer Temperatur von 100 bis 250 ° C arbeitet.

**4.** Zusammensetzung nach einem der Ansprüche 1 bis 3, dadurch gekennzeichnet, daß R in den Formeln (1) und (4) einen niederen Alkylrest, einen Cycloalkylrest oder einen Arylrest mit 1 bis 13 Kohlenstoffatomen bedeutet, daß $Ar_1$ in der Formel (2a), $Ar_2$ in der Formel (2b), Ar in der Formel (4) und Ar' in der Formel (6) jeweils gebildet sind aus einem Ring oder mehreren Ringen, die miteinander kondensiert oder miteinander verbunden sind über eine Einfachbindung oder eines der folgenden Atome oder eine der folgenden divalenten Gruppierungen:
$-O-$; $-S-$; $-SO-$; $-SO_2-$; $-CO-$; $-CH_2-$; $-CF_2-$; $-C(CH_3)_2-$; $-C(CF_3)_2-$; $-COO-$; $-CONH-$; $-Si(CH_3)_2-$; $-O-Si(CH_3)_2-O-$
und jeweils 5 bis 7 Atome enthalten.

**5.** Zusammensetzung nach einem der Ansprüche 1 bis 4, dadurch gekennzeichnet, daß man in der Polykondensationsreaktion die Reagentien (a) in einem stöchiometrischen Überschuß einsetzt und die Reaktion abstoppt, indem man ein monofunktionelles Reagens, ausgewählt aus Anilin und substituierten Anilinen, einsetzt.

**6.** Zusammensetzung nach einem der Ansprüche 1 bis 5, dadurch gekennzeichnet, daß man in der Polykondensationsreaktion die Reagentien (b) in einem stöchiometrischen Überschuß einsetzt und daß man die Reaktion abstoppt, indem man ein monofunktionelles Reagens, ausgewählt aus den Anhydriden und den Halbestern der Phthalsäure und der substituierten Phthalsäuren, einsetzt.

**7.** Zusammensetzung nach einem der Ansprüche 1 bis 6, die in Form eines Films oder eines Überzugs vorliegt.

**8.** Verfahren zum Ätzen eines Films oder eines Überzugs nach Anspruch 7, dadurch gekennzeichnet, daß man den Film oder den Überzug einem Angriff durch eine basische wäßrige Lösung aussetzt.

**9.** Verfahren nach Anspruch 8, dadurch gekennzeichnet, daß der Film oder Überzug vorher bei einer Temperatur unterhalb 300 ° C getrocknet wird.

**10.** Verfahren nach einem der Ansprüche 8 bis 9, dadurch gekennzeichnet, daß man das Material nach dem Ätzen stabilisiert durch mehrstündiges Erwärmen auf eine Temperatur von höher als 250 ° C.